# EUROPEAN PATENT SPECIFICATION

(11) **EP 2 149 855 B1**
(45) Date of publication and mention of the grant of the patent: **24.04.2013**
(21) Application number: 09166614.9
(22) Date of filing: 28.07.2009
(51) Int. Cl.: G06K 9/20, G06F 17/30

(54) **Operations information management system**
Betriebsinformationsverwaltungssystem
Système de gestion d'informations opératoires

(30) Priority: 31.07.2008 JP 2008198515
(43) Date of publication of application: 03.02.2010
(73) Proprietor: Ricoh Company, Ltd., Tokyo 143-8555 (JP)
(72) Inventor: Horikawa, Hirofumi, Kanagawa (JP)
(74) Representative: Schwabe - Sandmair - Marx

(56) References cited:
- EP-A- 0 751 672
- US-A- 5 721 940
- US-A1- 2004 044 955
- US-A1- 2004 194 026
- US-A1- 2008 162 603
- OCE DOCUMENT TECHNOLOGIES: "DokuStar Produktfamilie" INTERNET CITATION, [Online] XP002399736 Retrieved from the Internet: URL:http://www.electronic-office.de/pdf/Oc e-Odt/DOKuStar_Product_Family_d.pd> [retrieved on 2006-09-20]

## Description

### BACKGROUND OF THE INVENTION

### 1. Field of the Invention

The present invention relates to a technology for collectively managing both operations information acquired from a form image and operations information separately input by users.

### 2. Description of the Related Art

As a method for electronically managing operations information using a paper form, a known system converts the paper form into image data through a device such as a scanner and performs character recognition processing and form processing for check mark recognition with respect to entry items of the image data. For example, Patent , Document 1 discloses a technology that provides users with the same user interface when they correct a form processing result with respect to forms that are different in layout but have many common entry items. On the other hand, Patent Document 2 discloses a technology that displays original image data and correction input items and highlights regions corresponding to the correction input items on the original image data when users correct a form processing result by using a keyboard, whereby the users are allowed to easily recognize which region they have to confirm and input.
Patent Document 1: JP-A-2001-283150
Patent Document 2: JP-A-2005-328361

In the systems described above, however, emphasis is laid on correcting a result of automatic recognition processing with respect to entry contents on a paper form. Therefore, items not printed on the paper form or information not filled thereon cannot be managed. In other words, in actual operations, comments related to the paper form are to be added. In addition, when operations information is retrieved and calculated, the operations information (for example, information on how much operations have progressed with respect to the paper form), which cannot be transmitted only with the items of the paper form, are to be used. However, these points are not taken into consideration in the above systems.

US 2008/0162603 discloses the generation of a text document from a received document image; inecta data may be added to the text document by the user and stored with it.

If an inputting operation is performed on the same paper form plural times, there is no means for recognizing update information in which the inputting operation has already been performed on the paper form, and two irrelevant form processing results are generated from the one paper form and managed.

### SUMMARY OF THE INVENTION

In light of the above problems, the present invention provides an operations information management system as defined in claim 1. In addition, the present invention provides a corresponding operations information management method and an operations information management program as defined in claims 6 and 11.

The operations information management system according to embodiments of the present invention collectively manages both information acquired from image data of each form and operations information separately added to the form by the user, thereby making it possible to improve the processing efficiency of operations and visualize the operations.

Other objects, features and advantages of the present invention will become more apparent from the following detailed description when read in conjunction with the accompanying drawings.

### BRIEF DESCRIPTION OF THE DRAWINGS

FIG. 1 is a diagram showing an example of a form design used in an operations information management system according to embodiments;
FIG. 2 is a diagram for showing a format example of a form definition related to a form used in the operations information management system according to the embodiments;
FIG. 3 is a diagram for describing the outline of the operations information management system according to the embodiments;
FIG. 4 is a diagram for describing an operational principle at form creation processing in the operations information management system according to the embodiments;
FIG. 5 is a diagram for describing the operational principle at the form management processing in the operations information management system according to the embodiments;
FIG. 6 is a diagram for showing an example of a processing result management table in the operations information management system according to the embodiments;
FIG. 7 is a diagram for showing an example in which a list of processing results in the operations information management system according to the embodiments;
FIG. 8 is a diagram for showing a display example of a processing result confirmation program in the operations information management system according to the embodiments;
FIG. 9 is a diagram for showing a format example of the form definition related to the form used in the operations information management system according to the embodiments;
FIG. 10 is a diagram for showing an example of the hardware configuration of the operations information management system according to the embodiments;
FIG. 11 is a sequence diagram of form creation processing with the operations information management system according to the embodiments;
FIG. 12 is a sequence diagram of the form processing in the operations information management system according to the embodiments;
FIG. 13 is a sequence diagram of processing for confirming and correcting operations information data with the operations information management system according to the embodiments;
FIG. 14 is a sequence diagram of a modification of the form processing with the operations information management system according to the embodiments; and
FIG. 15 is a sequence diagram of a modification of processing for confirming and correcting operations information data with the operations information management system according to the embodiments.

### DETAILED DESCRIPTION OF THE PREFERRED EMBODIMENTS

A description is made of the best mode for carrying out embodiments of the present invention with reference to the accompanying drawings.

### (Operational principle of operations information management system according to embodiments)

### (1) Summary of operations information management system

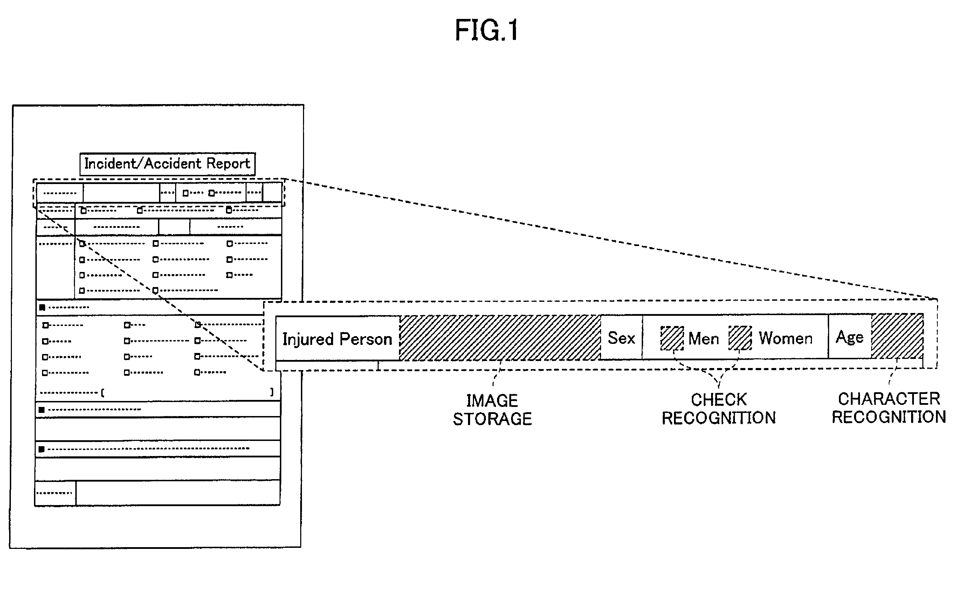

An operations information management system 100 according to the embodiments of the present invention is briefly described below with reference to FIG. 1. First, a creator, who creates a form used in the operations information management system 100, uses the document editor of a PC (Personal Computer) and arranges rectangles such as check boxes, tabularform entry regions, and the like in the region of the editor regarded as a form paper. Accordingly, the creator designs a form layout (draws an entry column with ruled lines, rectangles, or the like) and stores the designed form layout as a form design file. FIG. 1 is a diagram showing an example of a created form design.

Then, the creator creates a definition for each form in which a method for processing the form is described. For each region of the form, region information (position and size) and processing information (such as image storage processing, check mark recognition processing, character recognition processing, and symbol reading processing) are described in the definition. The region information must agree with the entry column of an actually-used form so as to be properly processed at the form processing. Furthermore, although not used at the form processing, input information for additional management columns, which is used for being displayed on a program used when the user confirms a processing result of the form processing, is also included in the form definition.

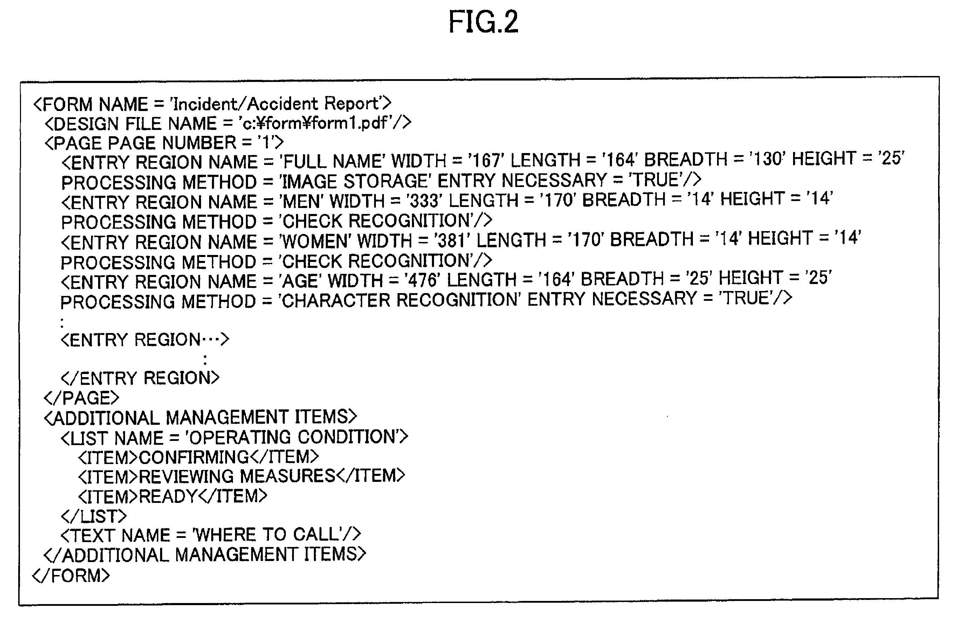

FIG. 2 is a diagram for showing a format example of the form definition. This format is created based on the form design shown in FIG. 1, defining that a name column is stored as an image, the check mark recognition processing is applied to men and women as sex (gender), and the character recognition processing is applied to an age column. In addition, the format also defines an attribute (hereinafter referred to as an entry rule) indicating the necessity of entry in the name column and the age column. Operations information which can be directly read from the image data of the form in this manner is particularly called first operations information. Moreover, in the form definition shown in FIG. 2, the format defines that a selection item "operating condition" and a text region "where to call" are defined as input information for additional management items that are operations information (hereinafter referred to as second operations information) capable of being added to the form by the user. Here, the second operations information cannot be read (extracted) from the image data of the form. However, it refers to the operations information that the user subsequently inputs by using an input apparatus such as a PC and must be managed (held) so as to be associated with the first operations information. The definition of the form thus created is set in the operations information management system 100. Furthermore, an image dictionary required for identifying image data related to the form is also created and set in the operations information management system 100.

Furthermore, settings related to data output processing are performed so that each processing result (= the first operations information) of the image storage processing, the check mark recognition processing, the character recognition processing, and symbol reading processing with respect to the image data of the form is output from the operations information management system 100 to the outside. Here, the settings related to the data output processing include setting an event as a trigger for outputting data, a data output destination, and setting information (hereinafter referred to as data output definition) configured in the form of data output. For example, the event of data output is effected when ten cases of the first operations. information items related to a specific form are accumulated, or it is effected at the end of a month or the beginning of a week. An example of the data output destination, a manager's e-mail address, a folder on a document management server, external Web services, or the like is presumed. As an example of a data output format, a CSV (Comma-Separated Values) format obtained by converting operations information, a PDF (Portable-Separated Values) format obtained by combining image data and operations information with each other, or the like is presumed. This data output definition is also created and set in the operations information management system 100.

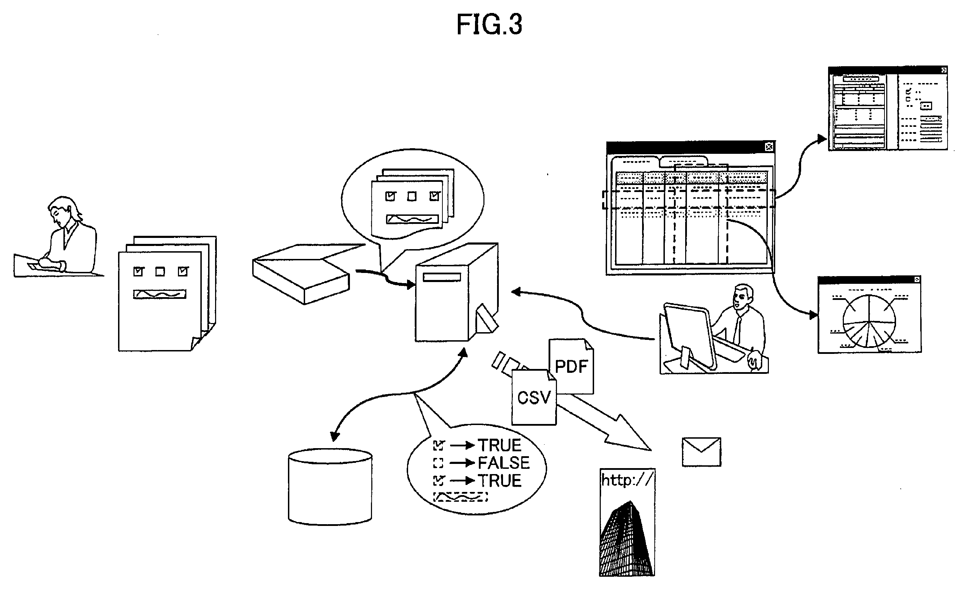

Next, the flow of operations using the above form is described below. FIG. 3 is a diagram for describing the flow of the operations with the operations information management system 100. First, the user prints a created form design on, for example, a paper medium. The user fills in information (particulars) necessary for the operations on the printed form. After filling in the information, the user converts the filled form into image data by using a multi-function peripheral or a scanner and inputs the image data to the operations information management system 100. When receiving the image data, the operations information management system 100 identifies which form the image data are related to, performs the image storage processing, the check recognition processing, the character recognition processing, the symbol reading processing, and the like in accordance with the definition of the identified form, and stores the first operations information as a processing result in a database (storage unit). When the form processing is completed and the first operations information is stored, the user can confirm the processing result by using a result confirmation program. By using the result confirmation program, the user can also perform not only confirmation of the processing result but also addition of the second operations information as additional management items other than the entry items of the form with respect to the processing result of each form. Moreover, the user can perform calculation of the items (entry items and additional management items) of the form by using the result confirmation program. Thus, the second operations information items as data other than the entry contents of the form are added so as to be associated with the first operations information acquired from the image data of each form, and these information items are collectively managed. As a result, it is possible to perform an analysis that cannot be performed with a database where only the entry contents of the form are stored.

Furthermore, the operations information management system 100 always monitors whether any specified event corresponding to the trigger for outputting data has occurred. When detecting the occurrence of an event, the operations information management system 100 performs output processing corresponding to the event.

In the following description, an operations information storage unit, an operations information comparison unit, and an operations information management unit in claims correspond to a data management unit 180. In addition, a form inadequacy determination unit and an operations information extraction unit in the claims correspond to a form processing unit 160 or a data edit unit 190.

### (2) Form creation processing with operations information management system

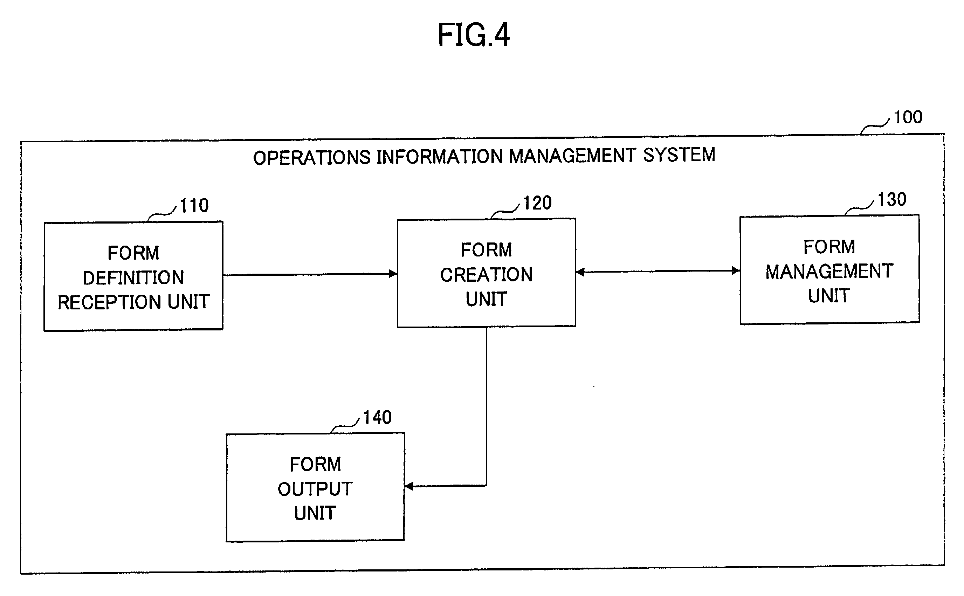

An operational principle related to form creation processing with the operations information management system 100 is described below with reference to FIG. 4. FIG. 4 is a diagram for describing the operational principle at the form creation processing with the operations information management system 100. The operations information management system 100 has a form definition reception unit 110, a form creation unit 120, a form management unit 130, and a form output unit 140.

The form definition reception unit 110 receives from the user a form definition and the number of printed copies related to a form to be printed and informs the form creation unit 120 of the received form definition and the number of the printed copies.

The form creation unit 120 calculates a total print number based on the form definition (informed by) acquired from the form definition reception unit 110 and the number,of pages described as the number of the printed copies, and requests the form management unit 130 to generate form identifiers corresponding to the total print number. Then, the form creation unit 120 acquires the form identifiers from the form management unit 130. At the same time, the form creation unit 120 acquires a form design file described in the form definition from the form management unit 130. After that, the form creation unit 120 codes the acquired form identifiers to create symbols, puts these symbols in each page of the acquired form design file, and informs the form output unit 140 of generated print data.

When acquiring the request for generating the form identifiers, the form definition, and the number of the form identifiers (the number of the printed copies) from the outside, the form management unit 130 generates the requested number of the form identifiers, manages the form identifiers and the received form definition so as to be associated with each other, and informs the form creation unit 120 of the generated form identifiers. Furthermore, when acquiring the form identifiers from the outside, the form management unit 130 informs the form creation unit 120 of the form definition corresponding to the acquired form identifiers.

The form output unit 140 prints the print data acquired from the form creation unit 120.

### (3) Form management processing with operations information management system

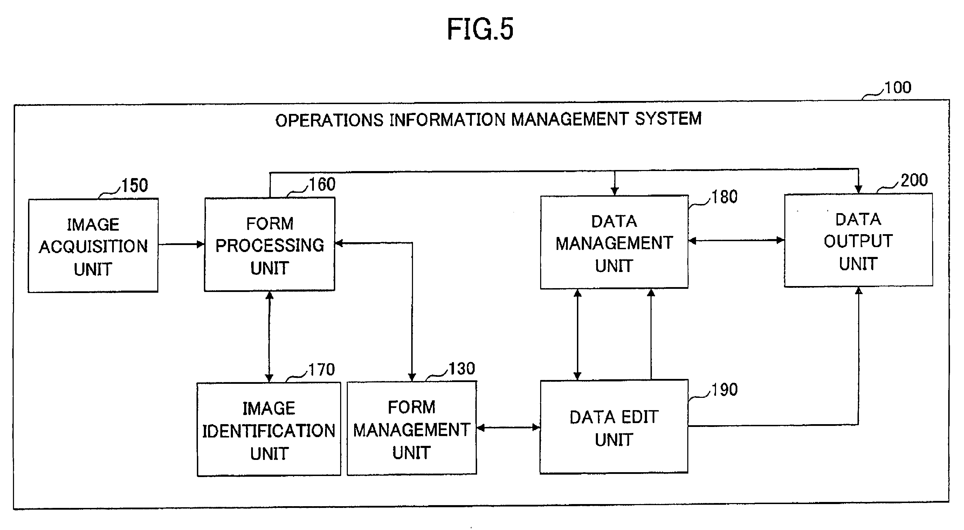

An operational principle related to form management processing with the operations information management system 100 is described below with reference to FIG. 5. FIG. 5 is a diagram for describing the operational principle at the form management processing with the operations information management system 100. The operations information management system 100 has an image acquisition unit 150, a form processing unit 160, an image identification unit 170, a data management unit 180, a data edit unit 190, a data output unit 200, and the form management unit 130.

The image acquisition unit 150 acquires the image data of a form and informs the form processing unit 160 of the acquired image data. If the form is a paper medium, the image acquisition unit 150 acquires image data of the form from an image device such as a digital camera or a scanner. Furthermore, as another mode, the image acquisition unit 150 acquires an electronic form displayed by an application program from a printer driver capable of creating an image (a raster image related to the form).

The form processing unit 160 acquires the image data of the form from the image acquisition unit 150 and performs the form processing based on the identifiers acquired from the image identification unit 170 and the form definition acquired from the form management unit 130. The form processing unit 160 performs the processing specified in the form definition with respect to the region of the image data of the form that is determined by the coordinate information of the entry region in the form definition. The form processing unit 160 repeatedly performs this processing according to the number of the entry regions. Furthermore, the form processing unit 160 confirms whether an entry rule described in the form definition is followed and then informs the data management unit 180 of the first operations information, the image data, the form identifiers, and the verification result of the entry rule resulting from the form processing. Furthermore, immediately after informing the data management unit 180 of the first operations information and the like, the form processing unit 160 informs the data output unit 200 of added first operations information.

If the image data acquired from the form processing unit 160 have form identifiers of, for example, QR-codes as machine-readable symbols, the image identification unit 170 decodes the symbols to extract the form identifiers and informs the form processing unit 160 of the extracted form identifiers. If the image data do not have the form identifiers, the image identification unit 170 identifies the form by using the characteristics of the form image data and the form image dictionary as described in the document JP-A-11-25215 and informs the form processing unit 160 of an identification result as the form identifiers.

The form management unit 130 manages the form identifiers and the form definition so as to be associated with each other. When acquiring the form identifiers from the outside, the form management unit 130 returns the form definition corresponding to the acquired form identifiers.

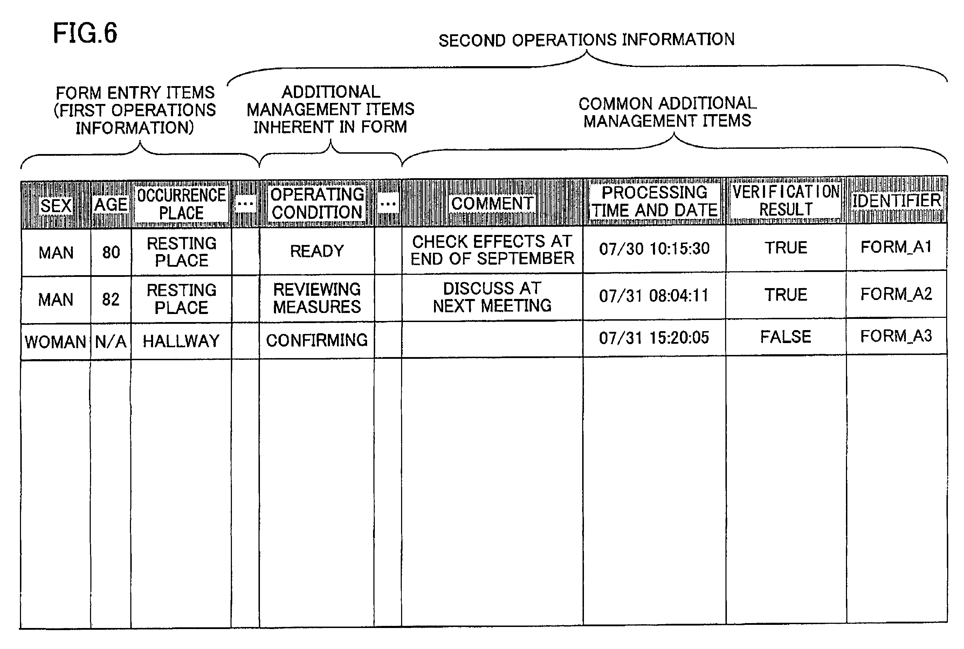

The data management unit 180 has a table in which the first and second operations information and the image data are stored. In the table, the operations information is stored corresponding to each form. For example, as shown in FIG. 6, the column items of the operations information stored by the data management unit 180 are constituted of the entry items (that correspond to the first operations information) of the corresponding form, the additional management items (such as operating condition) inherent in the form, and the additional management items (such as a comment, accompanying material, processing time and date, a form identifier, and a verification result) common to all the forms (the additional management items inherent in the form and the additional management items common to all the forms correspond to the second operations information). FIG. 6 is a diagram for showing an example of the table storing the result obtained when the form processing is performed with respect to the form shown in FIG. 1. However, if the form processing is performed with respect to a form different from that shown in FIG. 1, the entry items and the additional management items of the form serve as the column items, and a result is stored in a table different from that shown in FIG. 6.

When receiving a request for issuing stored data from the outside, the data management unit 180 returns the first and second operations information and the form identifiers. Furthermore, if the form identifiers have been already stored at the time of receiving the form identifiers and the operations information, the data management unit 180 updates the stored operations information with the operations information received together with the form identifiers. On the other hand, if the form identifiers have not been stored, the data management unit 180 adds a new row to store the operations information.

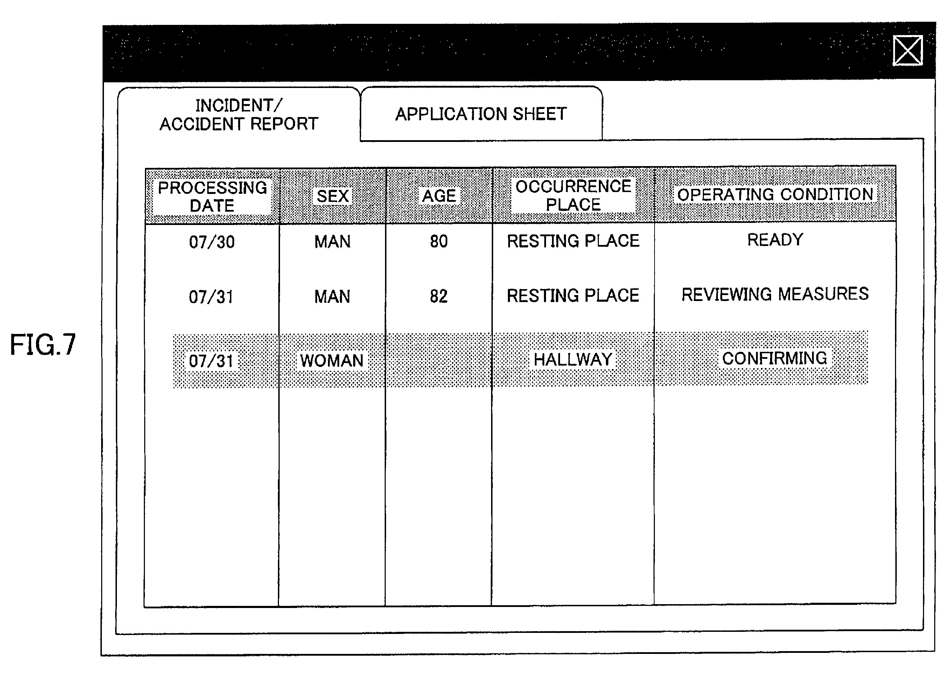

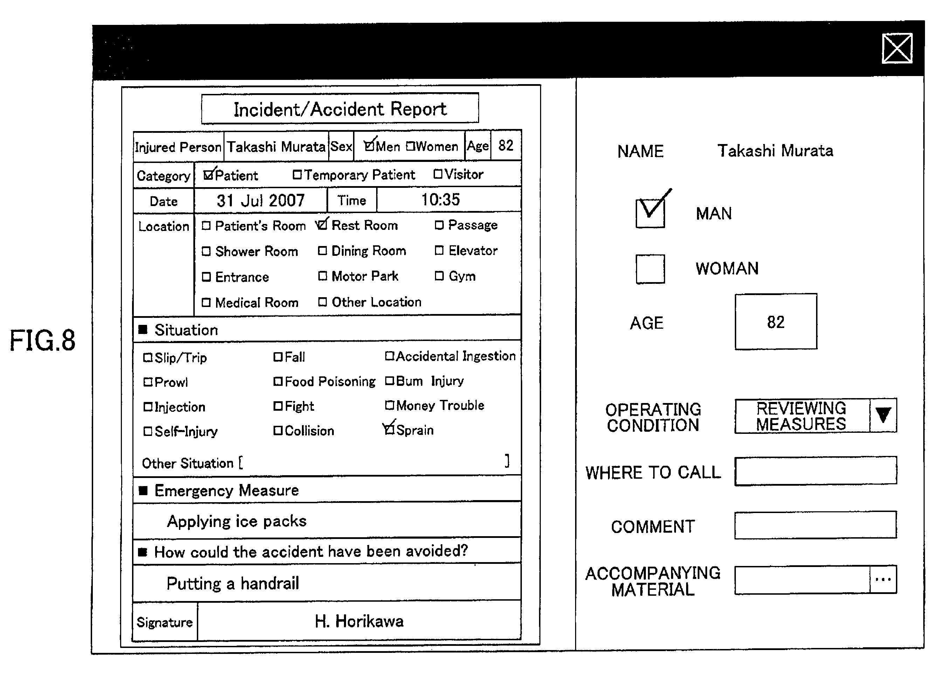

The data edit unit 190 is a program having a user interface. The data edit unit 190 acquires the operations information and the form identifiers from the data management unit 180 and presents them to the user. FIGS. 7 and 8 show an example in which a result of the form processing is displayed through the result confirmation program. FIG. 7 is a diagram for showing the example in which a list of processing results of the form as "Incident/Accident Report" is displayed in tabular form. In the list, the columns are constituted of the entry items and the additional management items of the form, and each row represents the operations information acquired from one form.

In the form shown in FIG. 7, a value corresponding to the column of age and the third row is invalid. Therefore, the data edit unit 190 highlights the third row to inform the user of the invalidity. Thus, as a result of the form processing, the data edit unit 190 reports the existence of the form having the inadequate entry content.

FIG. 8 is a diagram for showing an example in which the particulars of data in the second row of the list shown in FIG. 7 are displayed. When the particulars of the entry items are displayed, the form identifiers acquired from the data management unit 180 are reported to the form management unit 130 to obtain the form definition. On the left side of FIG. 8, the image data of the form acquired by the operations information management system 100 are displayed. On the right side of FIG. 8, a user interface for inputting and correcting the first and second operations information based on the form definition is displayed. On the upper right column of FIG. 8, the first operations information acquired from the image data displayed on the left side of FIG. 8 is displayed. On the middle column of FIG. 8, the second operations information items (additional management items), which are not the entry items of the form but defined in the form definition, are displayed. On the lower right column of FIG. 8, the second operations information items (additional management items) common to all the forms are displayed. The user can correct a processing result and add the second operations information (additional management items) necessary for the operations by using this program and an input unit. When the user corrects the entry items, a determination is made as to whether the correction by the user complies with an entry rule described in the form definition. If any problem occurs as a result of the determination, an alert message is sent to the user. Furthermore, the corrected/added first operations information is reported to the data management unit 180. Immediately after this information processing, the edited/added first operations information and the second operations information are reported to the data output unit 200.

The data output unit 200 acquires the first operations information and the second operations information stored in the data management unit 180 through the form processing unit 160 and the data edit unit 190. Furthermore, the data output unit 200 always monitors time. Then, the data output unit 200 determines whether the stored first operations information, the second operations information, or the time correspond to an event for outputting data defined in an output definition. If it is determined that the stored first operations information, the second operations information, or the time corresponds to the event for outputting data, the data output unit 200 performs output processing with respect to an output destination corresponding to the event.

### (4) Modification of form management processing with operations information management system

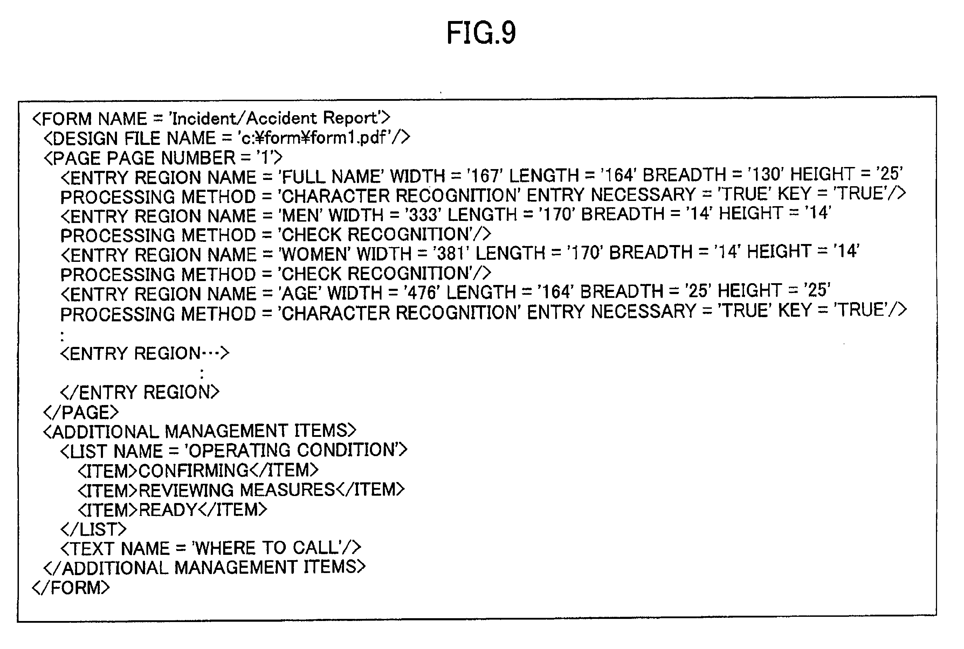

An operational principle regarding the problem solved by the present invention is described below with reference to FIG. 9. FIG. 9 is a diagram for showing a format example of the form definition of the form management processing with the operations information management system 100.

Similar to the form management processing with the operations information management system 100 as described in the above section (3), a creator who creates a form first uses the document editor of a PC and arranges rectangles such as check boxes, tabularform entry regions, and the like in the region of the editor regarded as a form paper. Accordingly, the creator designs a form layout (draws an entry column with ruled lines, rectangles, or the like) and stores the designed form layout as a form design file. Based on the form design file, the creator creates the form definition in which a form processing method for each form is described.

FIG. 9 shows the format example of the form definition. Here, "key" is added to some entry regions in the format of the form definition shown in FIG. 2. This key information is information corresponding to "main key" in a relational database system. If all the first operations information items in the entry regions where the value of the key information is "true" are the same, it indicates that a form processing result refers to the same form. Since the arrangement of the form definition and the creation and arrangement of an output definition are the same as those in the above section (3), their descriptions are omitted here.

Next, the form processing using this form is described. Since the operations by the user are the same as those in the above section (3), their descriptions are omitted here. When receiving the image data of the form, the operations information management system 100 identifies which form the image data are related to, performs the image storage processing, the check recognition processing, the character recognition processing, the symbol reading processing, or the like in accordance with the form definition of the identified form, and stores the first operations information as a processing result in the database. At the time of storing the first operations information, the operations information management system 100 compares the first operations information in the entry region where the key information is "true" in the form definition with the first operations information of the same type of the form in the database. If there is any form having the first operations information that completely agrees with the first operations information of the same type of the form, the first operations information is entirely updated. Since the following processes are the same as those described in the above section (3), their descriptions are omitted here.

In the same manner as the above section (3), the form processing unit 160 performs the form processing with respect to the image data of the form received from the image acquisition unit 150 and extracts the image data from the first operations information. However, in addition to this processing, the form processing unit 160 informs the data management unit 180 of the form definition acquired from the form management unit 130 besides the image data of the form and the extracted first operations information. After reporting the information processing to the data management unit 180, the operations of the form processing unit 160 are the same as those described in the above section (3).

After receiving the first operations information, the image data of the form, and the form definition as a processing result from the form processing unit 160, the data management unit 180 acquires information of an entry region as a key from the form definition. Then, the data management unit 180 extracts the first operations information on the entry region as the key and retrieves a row where all the first operations information items as the key agree with each other in the processing result management table (see FIG. 6) of the same type of the form that the data management unit 180 itself maintains. As a result of the retrieval, if there is any form processing result in which all the first operations information items agree with each other, the data management unit 180 updates other first operations information items with the first operations information received from the form processing unit 160. . In other cases, the data management unit 180 adds a new row and stores all the first operations information in the added row.

In displaying the particulars of the first operations information and the second operations information shown in FIG. 8, the data edit unit 190 acquires the form definition used for configuring a screen at the time of acquiring the first operations information and the like from the data management unit 180.

### (Hardware configuration of operations information management system)

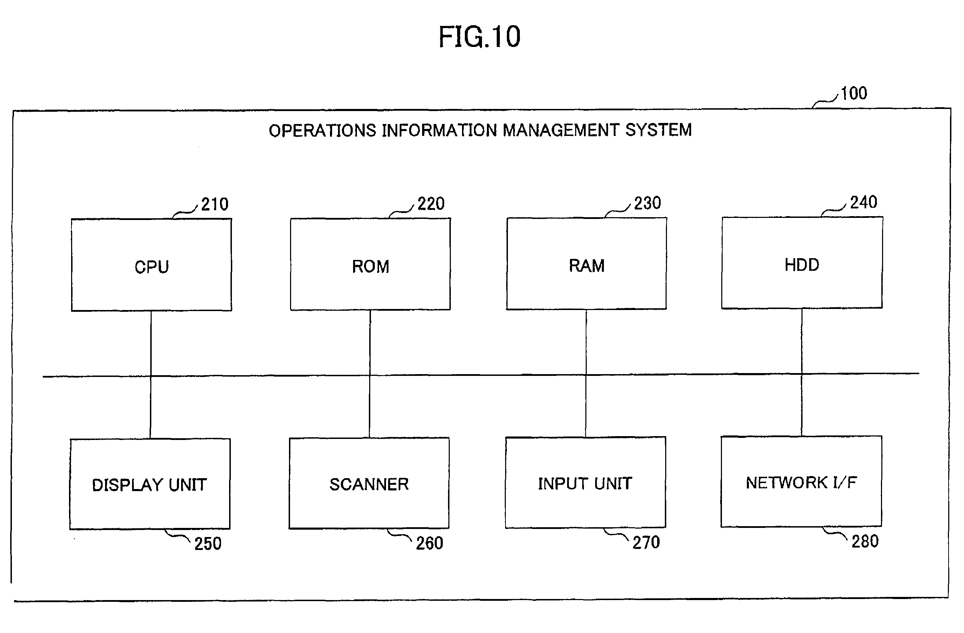

FIG. 10 is a diagram for showing an example of the hardware configuration of the operations information management system 100 according to the embodiments. The operations information management system 100 has a CPU (Central Processing Unit) 210, a ROM (Read-Only Memory) 220, a RAM (Random Access Memory) 230, a HDD (Hard Disk Drive) 240, a display unit 250, a scanner 260, an input unit 270, and a network I/F (Interface) 280.

The CPU 210 is a unit that executes a program stored in the ROM 220, calculates data developed (loaded) on the RAM 230 in accordance with instructions from the program, and controls the entire operations information management system 100. The ROM 220 stores the program and the data processed by the CPU 210. The RAM 230 develops (loads) the program and the data to be performed and temporarily stores calculation data during calculation when the program stored in the ROM 220 is executed by the CPU 210.

The HDD 240 stores an OS as basic software, application programs and plug-ins for expanding functions according to the embodiments, and the like together with associated data. In the embodiments, the form management unit 130 maintains data related to a form format at the HDD 240, and the data management unit 180 maintains data related to a form processing result at the HDD 240.

The display unit 250 is composed of a LCD (Liquid Crystal Display) and the like and displays an operations screen of the operations information management system 100. The scanner 260 acquires information displayed on a print medium as image data.

The input unit 270 is connected to the operations information management system 100 and serves as an interface for receiving an input from the user. Furthermore, the input unit 270 may be the same unit as the display unit 250.

The network I/F 280 is an interface for exchanging information (data) with a peripheral device having other communication control functions connected via a communication network. In the embodiments, the network I/F 280 is connected to a LAN and performs transmission and reception of data (for example, transmission and reception of a raster image related to a form) with a unit connected to the LAN in accordance with a communication protocol such as TCP/IP (Transmission Control Protocol/Internet Protocol).

The respective units of the operations information management system 100 are implemented when the CPU 210 executes the programs corresponding to the respective units stored in the ROM 220 or the HDD 240.

### (Flow of form creation processing with operations information management system)

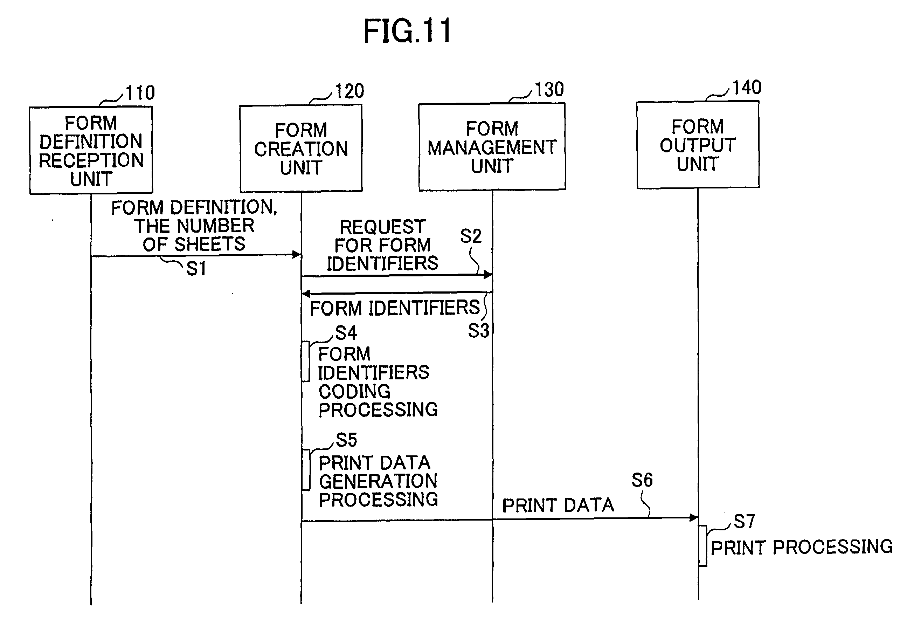

An example of the flow of the form creation processing with the operations information management system 100 is described below with reference to FIG. 11. FIG. 11 is a sequence diagram for showing the flow of the form creation processing with the operations information management system 100.

In S1, the form definition reception unit 110 receives a form definition to be printed together with a print request from the user and informs the form creation unit 120 of the form definition. In S2, the form creation unit 120 requests the form management unit 130 to issue form identifiers according to the number of printed sheets. In S3, the form creation unit 120 acquires the form identifiers corresponding to the request from the form management unit 130.

In S4 and S5, the form creation unit 120 codes the acquired form identifiers and creates print data in which the coded form identifiers are put in a form design file. In S6, the form creation unit 120 informs the form output unit 140 of the created print data. In S7, the form output unit 140 prints the acquired print data, thereby printing a form.

### (Flow of form processing with operations information management system)

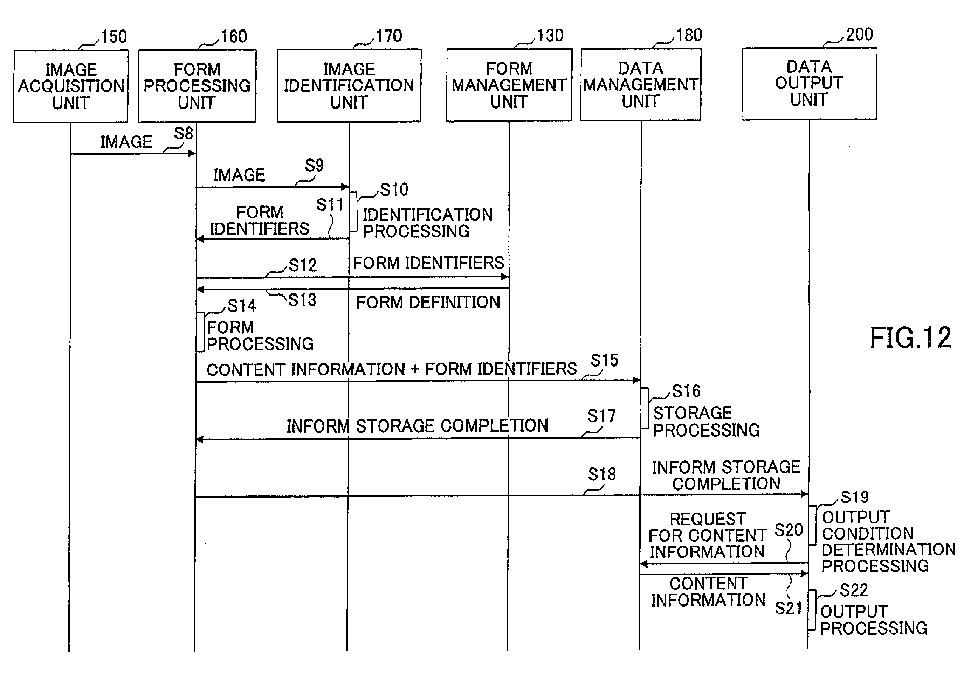

An example of the flow of the form processing with the operations information management system 100 is described below with reference to FIG. 12. FIG. 12 is a sequence diagram for showing the flow of the form processing with the operations information management system 100.

In S8, the image acquisition unit 150 acquires the image data of a form and informs the form processing unit 160 of the image data. In S9, the form processing unit 160 acquires the image data and informs the image identification unit 170 of the acquired image data. In S10, the image identification unit 170 performs identification processing with respect to the image data. If the image data acquired from the form processing unit 160 have form identifiers of, for example, QR-codes as machine-readable symbols, the image identification unit 170 decodes the symbols to extract the form identifiers. If the image data do not have the form identifiers, the image identification unit 170 identifies the form by using the characteristics of ruled lines or the like of the form and the form image dictionary to recognize the recognition result as the form identifiers.

In S11, the image identification unit 170 returns the acquired form identifiers to the form processing unit 160. In S12, the form processing unit 160 informs the form management unit 130 of the form identifiers. In S13, the form management unit 130 informs the form processing unit 160 of the form definition corresponding to the acquired form identifiers.

In S14, the form processing unit 160 performs the form processing based on the acquired form definition with respect to the image data of the form acquired from the image acquisition unit 150, thereby acquiring the first operations information and making a confirmation based on an entry rule. In S15, the form processing unit 160 informs the data management unit 180 of the first operations information, the confirmation result based on the entry rule, and the form identifiers.

In S16, the data management unit 180 acquires the first operations information, the confirmation result based on the entry rule, and the form identifiers from the form processing unit 160 and stores them in the HDD 240. In S17, the data management unit 180 informs the form processing unit 180 of the completion of the storage.

In S18, the form processing unit 160 informs the data output unit 200 of the form identifiers, reporting that the form processing with respect to the form identifiers has been completed. In S19, the data output unit 200 determines whether the stored first operations information, the second operations information, or the time correspond to an event for outputting data defined in an output definition. If it is determined that the stored first operations information, the second operations information, or the time corresponds to the output event, the data output unit 200 acquires the first operations information from the data management unit 180 in S20 and S21, and outputs the first operations information in accordance with the output method and the output destination of the output definition in S22.

### (Flow of form-data confirmation and correction processing with form information management system)

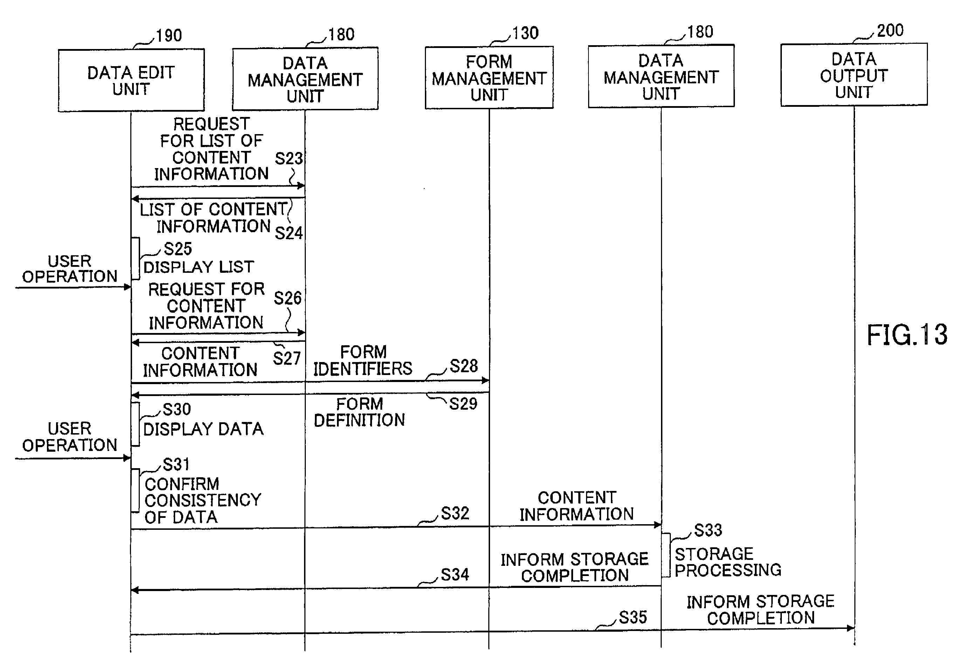

An example of the flow of form-data confirmation and correction processing with the operations information management system 100 is described below with reference to FIG. 13. FIG. 13 is a sequence diagram for showing the flow of the form-data confirmation and correction processing with the operations information management system 100.

In S23 and S24, the data edit unit 190 acquires a list of processed forms from the data management unit 180. In S25, the data edit unit 190 displays the list in the manner as shown in FIG. 7. In this case, the second operations information may have predetermined data as default values. Then, when the user designates specific form data from the list items, the data edit unit 190 requests the data management unit 180 to issue the first operations information, the second operations information, the image data, and the form identifiers related to the processed form data designated by the user in S26. In S27, the data edit unit 190 displays the acquired contents in the manner as shown in FIG. 8.

In S28 and S29, the data edit unit 190 acquires from the form management unit 130 a form definition corresponding to the form identifiers acquired from the data management unit 180. In S30, the data edit unit 190 displays the first and second operations information. When the user performs an additional input or editing on the first and second operations information, the data edit unit 190 confirms whether the additional input or the correction complies with an entry rule described in the form definition in S31. In S32, the data edit unit 32 informs the data management unit 180 of the confirmation result based on the entry rule and the operations information (first and second operations information) after the additional input or the correction. If it is determined that there is any problem in the confirmation result based on the entry rule, the data edit unit 190 outputs an alert message to report the problem to the user.

In S33, the data management unit 180 stores the operations information and the confirmation result based on the entry rule acquired from the data edit unit 190 in the HDD 240. In S34, the data management unit 180 informs the data edit unit 190 of the completion of the storage. In S35, the data edit unit 190 informs the data output unit 200 of the form identifiers, reporting that the form processing with respect to the form identifiers has been completed. The following processing of the data output unit 200 is the same as the processing in the above form processing flow.

Thus, it is possible to provide the operations information management system 100 capable of managing the items that are not printed on the form or the information that is not entered on it.

### (Modification of flow of form processing with operations information management system)

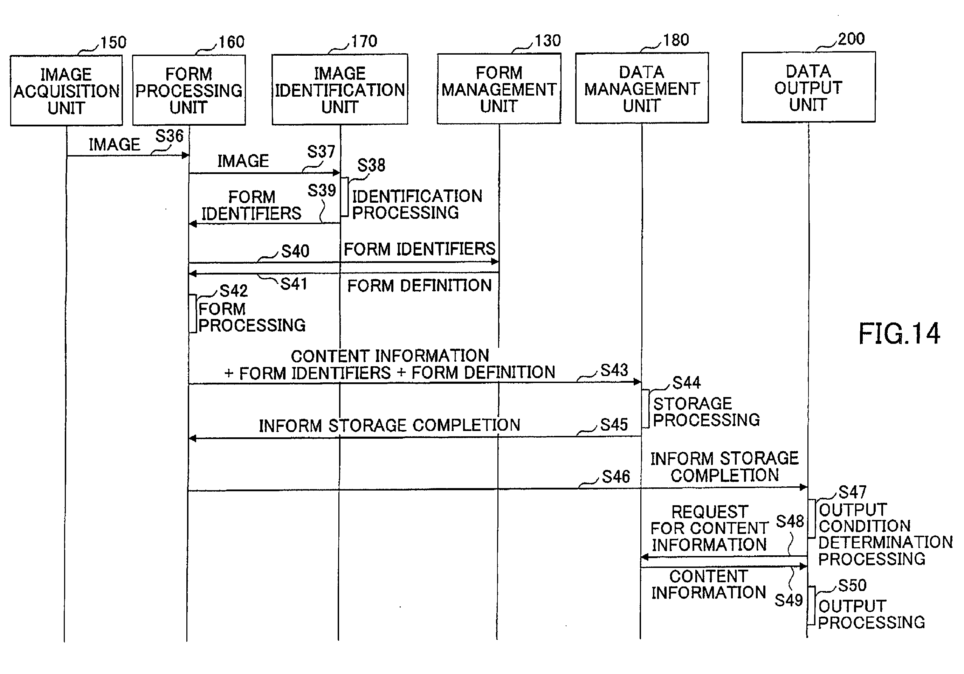

A modification of the flow of the form processing with the operations information management system 100 is described below with reference to FIG. 14. FIG. 14 is a sequence diagram for showing the flow of the form processing with the operations information management system 100.

In S36, the image acquisition unit 150 acquires the image data of a form and informs the form processing unit 160 of the image data. In S37, the form processing unit 160 acquires the image data and informs the image identification unit 170 of the acquired image data. In S38, the image identification unit 170 performs identification processing with respect to the image data. If the image data acquired from the form processing unit 160 have form identifiers of, for example, QR-codes as machine-readable symbols, the image identification unit 170 decodes the symbols to extract the form identifiers. If the image data do not have the form identifiers, the image identification unit 170 identifies the form by using the characteristics of ruled lines or the like of the form and the form image dictionary to recognize the recognition result as the form identifiers.

In S39, the image identification unit 170 returns the acquired form identifiers to the form processing unit 160. In S40, the form processing unit 160 informs the form management unit 130 of the form identifiers. In S41, the form management unit 130 informs the form processing unit 160 of the form definition corresponding to the acquired form identifiers.

In S42, the form processing unit 160 performs the form processing based on the acquired form definition with respect to the image data of the form acquired from the image acquisition unit 150, thereby acquiring the first operations information and making a confirmation based on an entry rule. In S43, the form processing unit 160 informs the data management unit 180 of the first operations information, the confirmation result based on the entry rule, and the form identifiers.

After receiving the first operations information, the image data of the form, and the form definition as a processing result from the form processing unit 160 in S44, the data management unit 180 acquires information on an entry region as a key from the form definition. Then, the data management unit 180 extracts the first operations information on an entry region as a key and retrieves a row where all the first operations information items as the key agree with each other in the processing result management table (see FIG. 6) of the same type of the form that the data management unit 180 itself maintains. As a result of the retrieval, if there is any form processing result in which all the first operations information items agree with each other, the data management unit 180 updates other first operations information items with the first operations information received from the form processing unit 160. In other cases, the data management unit 180 adds a new row and stores all the first operations information items in the added row. Then, in S45, the data management unit 180 informs the form processing unit 180 of the completion of the storage.

In S46, the form processing unit 160 informs the data output unit 200 of the form identifiers, reporting that the form processing with respect to the form identifiers has been completed. In S47, the data output unit 200 determines whether the stored first operations information, the second operations information, or the time correspond to an event for outputting data defined in an output definition. If it is determined that the stored first operations information, the second operations information, or the time corresponds to the output event, the data output unit 200 acquires the first operations information from the data management unit 180 in S48 and S49, and outputs the first operations information in accordance with the output method and the output destination of the output definition in S50.

Thus, it is possible to prevent two irrelevant form processing results from being generated from one form and held.

### (Modification of flow of form-data confirmation and correction processing with operations information management system)

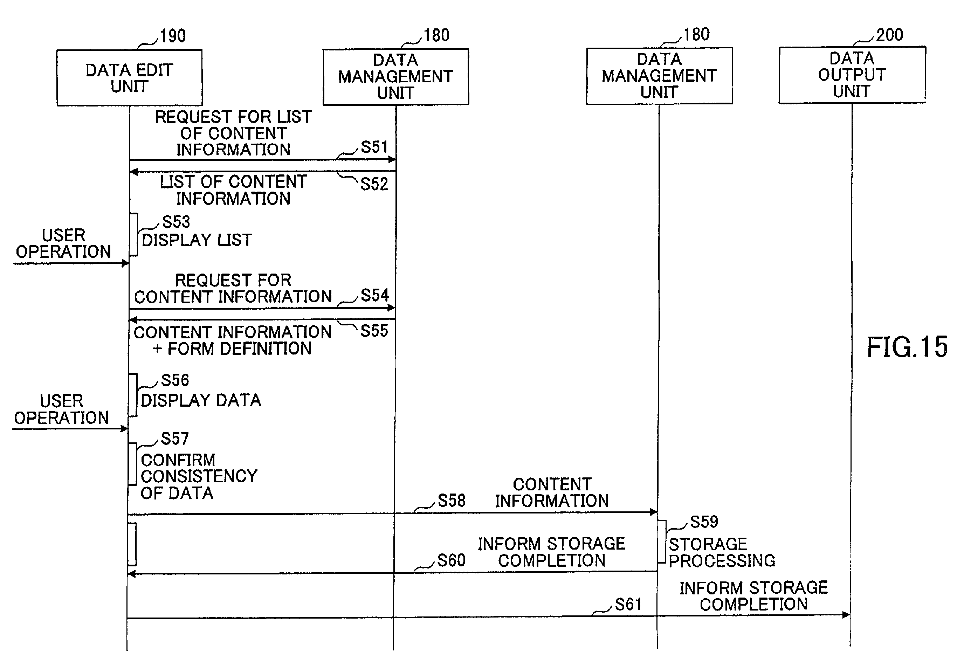

A modification of the flow of form-data confirmation and correction processing with the operations information management system 100 is described below with reference to FIG. 15. FIG. 15 is a sequence diagram for showing the flow of the form-data confirmation and correction processing with the operations information management system 100.

The flow of this modification is the same as the description described above except that information to be stored in the data management unit 180 includes the first and second operations information, the confirmation result based on an entry rule, and the form definition.

In S51 and S52, the data edit unit 190 acquires a list of processed forms from the data management unit 180. In S53, the data edit unit 190 displays the list in the manner as shown in FIG. 7. Then, when the user designates specific form data from the list items, the data edit unit 190 requests the data management unit 180 to issue the operations information, the image data, and the form identifiers related to the processed form data designated by the user in S54. In S55 and S56, the data edit unit 190 displays the acquired contents in the manner as shown in FIG. 8.

When the user performs an additional input or editing on the operations information displayed by the data edit unit 190, the data edit unit 190 confirms whether the additional input or the correction complies with the entry rule described in the form definition in S57. In S58, the data edit unit 190 informs the data management unit 180 of the confirmation result based on the entry rule and the added or corrected operations information. At the same time, if it is determined that there is any problem in the confirmation result based on the entry rule, the data edit unit 190 outputs an alert message to report the problem to the user. In S59, the data management unit 180 stores the acquired data in the HDD 240. In S60, the data management unit 180 informs the data edit unit 190 of the completion of the storage. In S61, the data edit unit 190 informs the data output unit 200 of the form identifiers, reporting that the form processing with respect to the form identifiers has been completed. The following processing of the data output unit 200 is the same as the processing in the above form processing flow.

The present invention may provide an operations information management system that collectively manages both information acquired from image data of each form and operations information separately added to the form by the user, thereby improving the processing efficiency of operations and visualizing the operations. In addition, the present invention may provide an operations information management method and an operations information management program.

The present invention is not limited to the specifically disclosed embodiments, and variations and modifications may be made without departing from the scope of the present invention as defined by the appended claims.

## Claims

1. An operations information management system, comprising:
an input unit that receives an input from a user;
a form having entry regions in which the user enters operations information;
a storage unit that stores operations information records comprising first operations information extracted from image data of the form based on a rule determined corresponding to the form and second operations information input by the user through the input unit so that the first operations information and the second operations information are associated with each other, **characterized by**
an operations information comparison unit that compares the first operations information extracted from the image data with the first operations information of other operations information stored by the operations information storage unit in those entry regions of the first operations information items marked as key items to retrieve other operations information records having first operation information that completely agrees with the extracted first operation information in the key regions; and
an operations information update unit that entirely updates the first operations information in the retrieved other operations information records with the extracted first operations information.

2. The operations information management system according to claim 1, **characterized in that**
the image data are acquired by a scanner of the operations information management system.

3. The operations information management system according to any one of claims 1 or 2, **characterized in that**
the image data are data computerized by a printer driver that generates a raster image related to the form.

4. The operations information management system according to any one of claims 1 through 3, further comprising:
a form inadequacy determination unit that determines whether there is an omission of entry by the user in the first operations information extracted based on the rule.

5. The operations information management system according to any one of claims 1 through 4, further comprising:
an operations information extraction unit that acquires, if there are plural of the forms, form identification information for identifying the forms from the image data and extracts the first operations information based on the rule corresponding to the acquired form identification information.

6. An operations information management method of an operations information management system, comprising:
a step in which an input unit receives an input from a user;
a step in which a storage unit stores operations information records comprising first operations information extracted from image data of a form having entry regions in which information related to operations is entered based on a rule determined corresponding to the form and second operations information input by the user through the input unit so that the first operations information and the second operations information are associated with each other, **characterized by**
a step in which an operations information comparison unit compares the first operations information extracted from the image data with the first operations information of other operations information stored by the operations information storage unit in those entry regions of first operations information items marked as key regions to retrieve other operations information records having first operation information that completely agrees with the extracted first operation information in the key regions; and
a step in which an operations information update unit entirely updates the first operations information in the retrieved other operations information records with the extracted first operations information

7. The operations information management method according to claim 6, **characterized in that**
the image data are acquired by a scanner of the operations information management system.

8. The operations information management method according to any one of claims 6 or 7, **characterized in that**
the image data are data computerized by a printer driver that generates a raster image related to the form.

9. The operations information management method according to any one of claims 6 through 8, further comprising:
a step in which a form inadequacy determination unit determines whether there is an omission of entry by the user in the first operations information extracted based on the rule.

10. The operations information management method according to any one of claims 6 through 9, further comprising:
a step in which an operations information extraction unit acquires, if there are plural of the forms, form identification information for identifying the forms from the image data and extracts the first operations information based on the rule corresponding to the acquired form identification information.

11. An operations information management program that causes a computer to perform the operations information management method according to any one of claims 6 through 10.

## Patentansprüche

1. Ein Operations-Informations-Managementsystem, aufweisend:
eine Eingabeeinheit, die eine Eingabe von einem Benutzer empfängt;
ein Formular mit einem Eintragebereich, in den der Benutzer Operations-Informationen einträgt;
eine Speichereinheit, die Operations-Informations-Datensätze speichert, die erste Operations-Informationen, die basierend auf einer Regel, die dem Formular entsprechend bestimmt wurde, aus Bilddaten des Formulars extrahiert wurden, und zweite Operations-Informationen, die von dem Benutzer durch die Eingabeeinheit eingegeben wurden, so dass die ersten Operations-Informationen und die zweiten Operations-Informationen miteinander assoziiert sind, enthalten, **gekennzeichnet durch**
eine Operations-Informations-Vergleichseinheit, die die ersten Operations-Informationen, die aus den Bilddaten extrahiert wurden, mit den ersten Operations-Informationen von anderen Operations-Informationen, die von der Operations-Informations-Speichereinheit gespeichert werden, in denjenigen Eintragebereichen der ersten Operations-Informations-Elemente, die als Schlüsselelemente markiert sind, vergleicht, um andere Operations-Informations-Datensätze zu erhalten, die eine erste Operations-Information haben, die in den Schlüsselregionen mit der extrahierten ersten Operations-Information vollständig übereinstimmt; und
eine Operations-Informations-Aktualisierungseinheit, die die erste Operations-Information in den erhaltenen anderen Operations-Informations-Datensätzen vollständig mit der extrahierten ersten Operations-Informationen aktualisiert.

2. Das Operations-Informations-Managementsystem gemäß Anspruch 1, **dadurch gekennzeichnet, dass**
die Bilddaten durch einen Scanner des Operations-Informations-Managementsystems erzeugt werden.

3. Das Operations-Informations-Managementsystem gemäß einem der Ansprüche 1 oder 2, **dadurch gekennzeichnet, dass**
die Bilddaten Daten sind, die von einem Druckertreiber computerisiert wurden, der ein auf das Formular bezogenes Rasterbild erzeugt.

4. Das Operations-Informations-Managementsystem gemäß einem der Ansprüche 1 bis 3, weiter aufweisend:
eine Formular-Unzulänglichkeits-Ermittlungseinheit, die ermittelt, ob eine Auslassung eines Eintrags durch den Nutzer in den basierend auf der Regel extrahierten ersten Operations-Informationen vorliegt.

5. Das Operations-Informations-Managementsystem gemäß einem der Ansprüche 1 bis 4, weiter aufweisend:
eine Operations-Informations-Extraktionseinheit die, wenn eine Vielzahl von Formularen vorliegt, aus den Bilddaten eine Formularidentifikations-Information zum Identifizieren der Formulare erzeugt und die ersten Operations-Informationen basierend auf der Regel, die zu der ermittelten Formular-Identifikations-Information korrespondiert, extrahiert.

6. Ein Operations-Informations-Managementverfahren eines Operations-Informations-Managementsystems, aufweisend:
einen Schritt, in dem eine Eingabeeinheit eine Eingabe von einem Benutzer empfängt;
einen Schritt, in dem eine Speichereinheit Operations-Informations-Datensätze speichert, die erste Operations-Informationen, die aus Bilddaten eines Formulars, das Eintrageregionen enthält, in die auf Operationen bezogene Informationen eingegeben wurden, basierend auf einer Regel, die dem Formular entsprechend bestimmt wurde, extrahiert wurden, und zweite Operations-Informationen, die von dem Benutzer durch die Eingabeeinheit eingegeben wurden, so dass die ersten Operations-Informationen und die zweiten Operations-Informationen miteinander assoziiert sind, enthalten, **gekennzeichnet durch**
einen Schritt, in dem eine Operations-Informations-Vergleichseinheit die ersten Operations-Informationen, die aus den Bilddaten extrahiert wurden, mit den ersten Operations-Informationen von anderen Operations-Informationen, die von der Operations-Informations-Speichereinheit gespeichert werden, in denjenigen Eintragebereichen der ersten Operations-Informations-Elemente, die als Schlüsselelemente markiert sind, vergleicht, um andere Operations-Informations-Datensätze zu erhalten, die eine erste Operations-Information haben, die in den Schlüsselregionen mit der extrahierten ersten Operations-Information vollständig übereinstimmt; und
einen Schritt, in dem eine Operations-Informations-Aktualisierungseinheit die erste Operations-Information in den erhaltenen anderen Operations-Informations-Datensätzen vollständig mit den extrahierten ersten Operations-Informationen aktualisiert.

7. Das Operations-Informations-Managementverfahren gemäß Anspruch 6, **dadurch gekennzeichnet, dass**
die Bilddaten durch einen Scanner des Operations-Informations-Managementsystems erzeugt werden.

8. Das Operations-Informations-Managementverfahren gemäß einem der Ansprüche 6 oder 7, **dadurch gekennzeichnet, dass**
die Bilddaten Daten sind, die von einem Druckertreiber computerisiert wurden, der ein auf das Formular bezogenes Rasterbild erzeugt.

9. Das Operations-Informations-Managementverfahren gemäß einem der Ansprüche 6 bis 8, weiter aufweisend:
einen Schritt, in dem eine Formular-Unzulänglichkeits-Ermittlungseinheit ermittelt, ob eine Auslassung eines Eintrags durch den Nutzer in den basierend auf der Regel extrahierten ersten Operations-Informationen vorliegt.

10. Das Operations-Informations-Managementverfahren gemäß einem der Ansprüche 6 bis 9, weiter aufweisend:
einen Schritt, in dem eine Operations-Informations-Extraktionseinheit, wenn eine Vielzahl von Formularen vorliegt, aus den Bilddaten eine Formularidentifikations-Information zum Identifizieren der Formulare erzeugt und die ersten Operations-Informationen basierend auf der Regel, die zu der ermittelten Formular-Identifikations-Information korrespondiert, extrahiert.

11. Ein Operations-Informations-Managementprogramm, das einen Computer dazu veranlasst, das Operations-Informations-Managementverfahren gemäß einem der Ansprüche 6 bis 10 durchzuführen.

## Revendications

1. Système de gestion d'informations d'opérations, comprenant :
une unité d'entrée qui reçoit une entrée d'un utilisateur ;
un formulaire ayant des régions de saisie dans lesquelles l'utilisateur saisit des informations d'opérations ;
une unité de stockage qui stocke des enregistrements d'informations d'opérations comprenant des premières informations d'opérations extraites de données d'image du formulaire sur la base d'une règle déterminée correspondant au formulaire et des secondes informations d'opérations entrées par l'utilisateur par l'intermédiaire de l'unité d'entrée de sorte que les premières informations d'opérations et les secondes informations d'opérations soient associées les unes aux autres, **caractérisé par**
une unité de comparaison d'informations d'opérations qui compare les premières informations d'opérations extraites des données d'image avec les premières informations d'opérations d'autres informations d'opérations stockées par l'unité de stockage d'informations d'opérations dans ces régions de saisie des premiers éléments d'informations d'opérations marqués comme éléments clés afin de récupérer d'autres enregistrements d'informations d'opérations ayant des premières informations d'opérations qui concordent complètement avec les premières informations d'opérations extraites dans les régions clés ; et
une unité de mise à jour d'informations d'opérations qui met à jour entièrement les premières informations d'opérations dans les autres enregistrements d'informations d'opérations récupérés avec les premières informations d'opérations extraites.

2. Système de gestion d'informations d'opérations selon la revendication 1, **caractérisé en ce que**
les données d'image sont acquises par un scanneur du système de gestion d'informations d'opérations.

3. Système de gestion d'informations d'opérations selon l'une quelconque des revendications 1 ou 2, **caractérisé en ce que**
les données d'image sont des données informatisées par un pilote d'imprimante qui génère une image tramée liée au formulaire.

4. Système de gestion d'informations d'opérations selon l'une quelconque des revendications 1 à 3, comprenant en outre :
une unité de détermination d'inadéquation de formulaire qui détermine s'il y a une omission de saisie par l'utilisateur dans les premières informations d'opérations extraites sur la base de la règle.

5. Système de gestion d'informations d'opérations selon l'une quelconque des revendications 1 à 4, comprenant en outre :
une unité d'extraction d'informations d'opérations qui acquiert, s'il y a une pluralité des formulaires, des informations d'identification de formulaire pour identifier les formulaires à partir des données d'image et extrait les premières informations d'opérations sur la base de la règle correspondant aux informations d'identification de formulaire acquises.

6. Procédé de gestion d'informations d'opérations d'un système de gestion d'informations d'opérations, comprenant :
une étape dans laquelle une unité d'entrée reçoit une entrée d'un utilisateur ;
une étape dans laquelle une unité de stockage stocke des enregistrements d'informations d'opérations comprenant des premières informations d'opérations extraites de données d'image d'un formulaire ayant des régions de saisie dans lesquelles des informations liées à des opérations sont saisies sur la base d'une règle déterminée correspondant au formulaire et des secondes informations d'opérations entrées par l'utilisateur par l'intermédiaire de l'unité d'entrée de sorte que les premières informations d'opérations et les secondes informations d'opérations soient associées les unes aux autres, **caractérisé par**
une étape dans laquelle une unité de comparaison d'informations d'opérations compare les premières informations d'opérations extraites des données d'image avec les premières informations d'opérations d'autres informations d'opérations stockées par l'unité de stockage d'informations d'opérations dans ces régions de saisie de premiers éléments d'informations d'opérations marquées comme régions clés afin de récupérer d'autres enregistrements d'informations d'opérations ayant des premières informations d'opérations qui concordent complètement avec les premières informations d'opérations extraites dans les régions clés ; et
une étape dans laquelle une unité de mise à jour d'informations d'opérations met à jour entièrement les premières d'informations d'opérations dans les autres enregistrements d'informations d'opérations récupérés avec les premières informations d'opérations extraites.

7. Procédé de gestion d'informations d'opérations selon la revendication 6, **caractérisé en ce que**
les données d'image sont acquises par un scanneur du système de gestion d'informations d'opérations.

8. Procédé de gestion d'informations d'opérations selon l'une quelconque des revendications 6 ou 7, **caractérisé en ce que**
les données d'image sont des données informatisées par un pilote d'imprimante qui génère une image tramée liée au formulaire.

9. Procédé de gestion d'informations d'opérations selon l'une quelconque des revendications 6 à 8, comprenant en outre :
une étape dans laquelle une unité de détermination d'inadéquation de formulaire détermine s'il y a une omission de saisie par l'utilisateur dans les premières informations d'opérations extraites sur la base de la règle.

10. Procédé de gestion d'informations d'opérations selon l'une quelconque des revendications 6 à 9, comprenant en outre :
une étape dans laquelle une unité d'extraction d'informations d'opérations acquiert, s'il y a une pluralité des formulaires, des informations d'identification de formulaire pour identifier les formulaires à partir des données d'image et extrait les premières informations d'opérations sur la base de la règle correspondant aux informations d'identification de formulaire acquises.

11. Programme de gestion d'informations d'opérations qui amène un ordinateur à effectuer le procédé de gestion d'informations d'opérations selon l'une quelconque des revendications 6 à 10.
